# EUROPÄISCHE PATENTANMELDUNG

(11) **EP 2 502 886 A1**
(43) Veröffentlichungstag der Anmeldung: **26.09.2012**
(21) Anmeldenummer: 12002182.9
(22) Anmeldetag: 22.03.2012
(51) Int. Cl.: C03B 33/02, G01N 21/88

(54) **Visitierstation einer Produktionsanlage für Flachglasprodukte**

(30) Priorität: 24.03.2011 AT 4222011
(71) Anmelder: Softsolution GmbH, 3340 Waidhofen an der Ybbs (AT)
(72) Erfinder: Sonnleitner, Hermann, 3352 Sankt Peter in der Au (AT); Pfannenstill, Peter, 3340 Waidhofen an der Ybbs (AT)

(57) **Zusammenfassung**

Die Erfindung betrifft eine Visitierstation einer Produktionsanlage für Flachglasprodukte, wobei die Visitierstation dazu dient, an einer Glasscheibe (1) eine Sichtkontrolle und/oder Ausbesserungsarbeiten und/oder Montagetätigkeiten vorzunehmen, wozu die Visitierstation eine Anzeigefläche (3) aufweist, die dazu dient, Informationen an eine Bedienperson der Visitierstation mitzuteilen. Die Anzeigefläche (3) ist zumindest etwa gleich groß wie die Glasscheibe (1), zumindest annähernd parallel zur Glasscheibe (1) ausgerichtet und im Nahbereich der Glasscheibe (1), zu welchem auch die Glasscheibe selbst zu zählen ist, angeordnet.

## Beschreibung

Die Erfindung betrifft eine Visitierstation einer Produktionsanlage für Flachglasprodukte.

Im Zuge der automatischen Verarbeitung von Flachglas ist es in vielen Fällen üblich, die Glasscheiben durch automatische Glasreinigungsanlagen und nachgeschaltete automatische Oberflächeninspektionsanlagen zu führen und anschließend diese Glasscheibe in einer so genannten "Visitierstation" - die oft auch mit einer sog. "Rahmensetzstation" kombiniert ist, anzuhalten, um etwaige vom Oberflächeninspektionssystem erkannte Fehler manuell nachzubehandeln.

Methoden für die automatisierbare optische Fehlererkennung sind beispielsweise in den Schriften WO 200026647 A1, DD 258659 A1, EP 317638 B1, JP 2002257756 A1 und DE 3610484 C2 gezeigt.

Für die Arbeit an der Visitierstation werden unterstützend relevante Daten, wie. z.B. Position und Art eines Fehlers, an einem vom automatischen Oberflächeninspektionssystem gesteuerten Anzeigemonitor dargestellt, welcher an der Visitierstation aufgestellt ist. Es ist auch üblich andere, vom automatischen Oberflächeninspektionssystem unabhängige Bild- und Textdaten, mittels zusätzlichen Anzeigemonitoren für die Bedienungsperson an der Visitierstation darzustellen. Manche Visitierstationen sind mit zusätzlichen Leuchtkörpern ausgestattet, die zum Teil an einer versetzten Rückwand montiert sind, um so die visuelle Nachkontrolle der Glasscheibe zu erleichtern.

Die auf dem Anzeigemonitor dargestellten Bild- und Textinformationen enthalten unter anderem auch Koordinateninformationen (Position eines Fehlers, Position von Einbausprossen, Position von Abstandhaltern zwischen den Einzelscheiben, Scheibengeometrie etc.). Die Bedienungsperson wendet sich erst dem Monitor zu, liest die Informationen vom Monitor, wendet sich dann der Glasscheibe zu und führt an dieser an den durch die Information bestimmten Flächenbereichen Tätigkeiten durch, welche durch Informationen auf dem Monitor angewiesen sein können. Vor allem die Übertragung von der am Monitor wiedergegebenen Positionsinformation auf die konkrete Position auf der Glasscheibe ist eine geistige Leistung der Bedienungsperson, welche Zeitaufwand und Konzentration erfordert und auch eine Fehlerquelle darstellt. Diese Übertragung erschwert sich mit steigernder Größe bzw. Fläche der Glasscheibe.

Der Erfinder hat sich die Aufgabe gestellt, die Anzeige von Koordinateninformationen und zusätzlichen produktionsrelevanten Daten an einer Visitierstation einer Produktionsanlage von Flachglasprodukten zu verbessern, sodass für die Bedienungsperson das Zuordnen einer auf einer Anzeigefläche mitgeteilten Information zu dem davon betroffenen Flächenbereich auf der in der Visitierstation befindlichen Glasscheibe einfacher und klarer wird.

Für das Lösen der Aufgabe wird vorgeschlagen als Anzeigefläche mittels derer Positionsinformation über Flächenbereiche der Glasscheibe an denen eine Tätigkeit durchzuführen ist, eine Fläche vorzusehen, welche zumindest etwa gleich groß wie die betroffene Glasscheibe ist zumindest annähernd parallel zur Glasscheibe ausgerichtet ist und im Nahbereich der Glasscheibe, zu welchem auch die Glasscheibe selbst zu zählen ist, angeordnet ist.

Damit ist die Verwirklichung des abstrakten, zu Grunde liegenden Erfindungsgedankens möglich, wonach Informationen welche eine an einer Teilfläche der Glasscheibe durchzuführende Tätigkeit betreffen, an einem solchen Flächenbereich der Anzeigefläche dargestellt werden, von welchem aus jene Gerade, welche diesen Flächenbereich der Anzeigefläche mit den Augen der Bedienungsperson verbindet, durch die von der Information betroffene Teilfläche der Glasscheibe führt.

Es ist damit so, dass dann, wenn die Bedienungsperson eine Information auf der Anzeigefläche sieht, sie gleichzeitig direkt auf die von der Information betroffene Teilfläche der Glasscheibe sieht.

Die Information kann durch Bildsymbole oder durch Text dargestellt sein. Als Bildsymbol kann auch einfach das ausschließlich lokale Beleuchten eines Flächenbereichs der Glasscheibe verstanden werden, an welcher eine Arbeit durchzuführen ist.

Durch die mit der Anzeigefläche ohnehin realisierbare Lichtquelle kann auf eine Installation von zusätzlichen Beleuchtungskörpern verzichtet werden. Je nach Bedarf können entweder die gesamte Glasscheibe, oder aber auch nur relevante Teilbereiche davon durch die Anzeigefläche beleuchtet werden um die visuelle Kontrolle zu unterstützen.

In einer vorteilhaften Ausführungsform ist die Anzeigefläche eine von einer davon entfernt angeordneten Lichtquelle angestrahlte Projektionsfläche. Damit lässt sich jetzt schon kostengünstig die erforderliche Größe der Anzeigefläche realisieren. Ebenso kann die Anzeigefläche damit gut leicht und manövrierbar ausgeführt werden.

Die Projektion der Information in Form von Bild- oder Textinformation kann über einen oder mehrere herkömmliche Projektoren erfolgen, welche vor oder hinter der Anzeigefläche positioniert sein können.

Vor allem bei Verwendung von milchigen oder getönten Glasscheiben ist es vorteilhaft, die Glasscheibe selbst als Projektionsfläche zu verwenden. Damit ergibt sich ein besonders einfacher Aufbau. Die Zuordnung von Flächenbereichen der Anzeigefläche zu davon betroffenen Flächenbereichen an der Glasscheibe ist am direktesten. Sofern nicht die Glasscheibe selbst die Anzeigefläche ist, ist die Anzeigefläche von der Bedienungsperson aus gesehen, hinter der Glasscheibe angeordnet.

Die Erfindung wird anhand einer Skizze zu einer beispielhaften Ausführung, welche auch vorteilhafte Weiterentwicklungen beinhaltet, veranschaulicht:

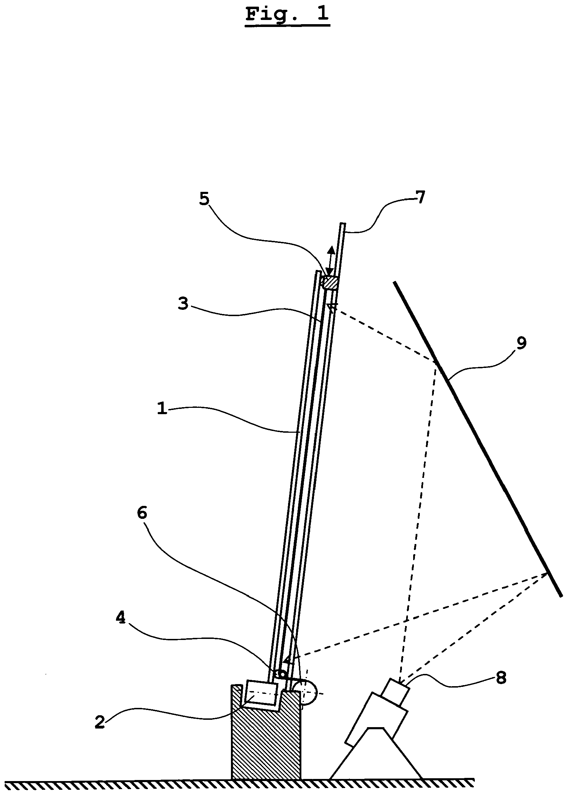

- Fig. 1:: zeigt für das Verständnis der Erfindung wesentliche Komponenten einer beispielhaften erfindungsgemäßen Visitierstation in Teilschnittansicht. Die Blickrichtung liegt dabei horizontal, parallel zur Ebene der zu behandelnden Glasscheibe.

Der Standort für die Bedienungsperson der in Fig. 1 dargestellten Visitierstation ist im linken Bildteil.

Für die Visitierstation gilt folgender Arbeitsablauf:

Die Glasscheibe 1 wird mittels angetriebenen Transportrollen (2) oder Transportriemen in die Visitierstation eingefahren. Zuvor wurde der an Führungsschienen 7 höhenverstellbare obere Rollenbalken 5 auf die aktuelle Scheibenhöhe einstellt, um in Kombination mit dem nicht verfahrbaren unteren Rollenbalken 4 das Hindurchfallen der Glasscheibe 1 zu verhindern.

Eine am verfahrbaren Rollenbalken 5 eingehängte und manuell einfach zu lösende Projektionsfläche 3 - welche nicht starr ist, sondern ein flexibles flächiges Material - wird durch eine am unteren Rollenbalken 4 angeordnete Umlenkrolle und durch die Aufrollvorrichtung 6 möglichst nahe an der Hinterseite der Glasscheibe 1 straff gezogen und bildet so die Projektionsfläche.

Die Projektionsfläche 3 ist mit dem verfahrbaren Rollenbalken 5 lösbar verbunden, sodass die Scheibenrückseite bei Bedarf auch von hinten zugängig ist. Im Bedarfsfall wird dazu die Verbindung zwischen Projektionsfläche 3 und verfahrbaren Rollenbalken 5 gelöst und die Projektionsfläche 3 von der Aufrollvorrichtung 6 aufgerollt.

Der Projektor 8 projiziert aktuell relevante Produkt- bzw. Produktionsdaten oder bestrahlt die Projektionsfläche 3 vollflächig oder partiell mit Licht, um eine visuelle Kontrolle zu unterstützen.

In der dargestellten Ausführung strahlt der Projektor 8 über eine Spiegelfläche 9 an die Projektionsfläche 3. (Vom Projektor ausgesandte Lichtstrahlen sind in Fig. 1 durch strichliert gezeichnete Pfeile symbolisiert.) Durch die Anwendung von einer oder mehrerer Spiegelflächen 9 für die Umlenkung des vom Projektor ausgestrahlten Lichtes kann Platzbedarf reduziert werden bzw. kann mit einer einfacheren Optik des Projektors das Auslangen gefunden werden. Natürlich könnte ein Projektor auch von jener Seite her an die Projektionsfläche 3 leuchten, an welcher die Bedienperson steht. Der Projektor bzw. die letzte Spiegelfläche vor der Projektionsfläche 3 sollte dann über der Bedienperson angeordnet sein.

Die beispielhaft dargestellte Visitierstation ist typischerweise bei der Isolierglasproduktion einzusetzen, kann aber auch zur Einzelscheibenproduktion herangezogen werden. Die "Glasscheibe 1" gemäß dieser Beschreibung kann also ein Verbund aus mehreren Einzelglasscheiben und dazugehörigen weiteren Teilen bzw. Schichten sein oder eine einzelne monolithische Glasscheibe. An der Visitierstation können bestimmungsgemäß an der Projektionsfläche 3 Produkt-, bzw. Produktionsdaten an eine Bedienperson mitgeteilt werden; die Projektionsfläche 3 kann aber auch einfach für die Beleuchtung der Glasscheibe 1 zwecks visueller Kontrolle verwendet werden.

Im Rahmen der Erfindung ist es durchaus denkbar und möglich, an Stelle einer Projektionsfläche 3 einen echten Monitor, beispielsweise basierend auf LCD oder Leuchtdioden an der Glasscheibe 1 zu positionieren. Zurzeit dürfte das noch wesentlich teurer sein als die skizzierte Ausführung mit Projektionsfläche. Mit neuartigen Technologien oder verändernden Preisen für bestehende Technologien oder durch Verwirklichung gröberer Auflösung unter Anwendung von bestehenden Technologien für Monitore kann es aber durchaus sein, dass eine Ausführung mit Monitor nicht nur die technischen sondern auch die wirtschaftlichen Rahmenbedingungen erfüllt.

Die angesichts der Zeichnung sehr anschaulich erkennbaren wesentlichsten Vorteile einer erfindungsgemäß ausgeführten Visitierstation gegenüber herkömmlichen Visitierstationen seien abschließend noch einmal kurz aufgelistet:
- Die Darstellung produkt- bzw. produktionsrelevanter Daten erfolgt direkt im Bereich der Glasscheibe 1. Damit braucht die Bedienperson nicht andauernd den Blick zwischen einer an einer anderen Stelle angeordneten Monitorfläche und der Glasscheibe hin und her zu schwenken.
- Es ist eine Taktzeitverbesserung und eine bessere Fehlervermeidung an der Visitierstation erreichbar, da die abzuarbeitenden Informationen direkt, im Maßstab 1:1 an der Glasscheibe 1 selbst ersichtlich sind. Damit ist für die Bedienperson keine konzentrations- und zeitaufwendige geistige Arbeit mehr erforderlich um Koordinateninformationen von einer an einer anderen Stelle angeordneten Monitorfläche an die Glasscheibe 1 zu übertragen.
- Es sind keine separaten Beleuchtungskörper erforderlich um die Glasscheibe 1 für die Sichtkontrolle auszuleuchten. Die Ausleuchtung der Glasscheibe erfolgt schon durch die ohnedies erforderliche Anzeigefläche selbst und sie braucht nur mehr für die relevanten Flächenbereiche der Glasscheibe 1 erfolgen. Damit wird auch Energie gespart.

## Patentansprüche

1. Visitierstation einer Produktionsanlage für Flachglasprodukte, wobei die Visitierstation dazu dient, an einer Glasscheibe (1) eine Sichtkontrolle und/oder Ausbesserungsarbeiten und/oder Montagetätigkeiten vorzunehmen, wobei die Visitierstation Transportmittel (2) für den An- und Abtransport einer Glasscheibe (1) , sowie Stützmittel (4, 5) für das Halten der Glasscheibe (1) in einer Position aufweist, sowie eine Anzeigefläche (3), die dazu dient, Informationen über den Zustand von Teilflächen der Glasscheibe (1) und/oder Informationen für an der Glasscheibe (1) oder mit der Glasscheibe (1) durchzuführende Tätigkeiten an eine Bedienperson der Visitierstation mitzuteilen,
**dadurch gekennzeichnet, dass**
die Anzeigefläche (3) zumindest etwa gleich hoch ist wie die Glasscheibe (1), zumindest annähernd parallel zur Glasscheibe (1) ausgerichtet ist und im Nahbereich der Glasscheibe (1), zu welchem auch die Glasscheibe selbst zu zählen ist, angeordnet ist.

2. Visitierstation nach Anspruch 1, **dadurch gekennzeichnet, dass** die Anzeigefläche die Glasscheibe (1) selbst ist.

3. Visitierstation nach Anspruch 1, **dadurch gekennzeichnet, dass** die Anzeigefläche (3) von der Arbeitsposition der die Visitierstation bedienenden Person aus gesehen hinter der Glasscheibe (1) liegt und somit durch die Glasscheibe (1) hindurch anzusehen ist.

4. Visitierstation nach einem der Ansprüche 1 bis 3, **dadurch gekennzeichnet, dass** die Anzeigefläche (3) eine von einem davon entfernt angeordneten Projektor (8) angestrahlte Projektionsfläche ist.

5. Visitierstation nach Anspruch 4, **dadurch gekennzeichnet, dass** das vom Projektor (8) abgestrahlte Licht über eine oder mehrere Spiegelflächen (9) an die Anzeigefläche (3) gelangt.

6. Visitierstation nach Anspruch 4 oder Anspruch 5, **dadurch gekennzeichnet, dass** die Projektionsfläche aus einem flexiblen flächigen Material besteht, welches durch einen parallel zur Ebene der Glasscheibe (1) geführt beweglichen Rollenbalken (5) spannbar ist, und dass die Glasscheibe (1) an dem Rollenbalken (5) anliegt.
